# EUROPÄISCHE PATENTSCHRIFT

(11) **EP 0 836 626 B1**
(45) Veröffentlichungstag und Bekanntmachung des Hinweises auf die Patenterteilung: **26.01.2000**
(21) Anmeldenummer: 96922019.3
(22) Anmeldetag: 21.06.1996
(51) Int. Cl.: C08G 18/10, C08F 283/00

(54) **HOCHFUNKTIONALISIERTE POLYURETHANE**
HIGHLY FUNCTIONALISED POLYURETHANES
POLYURETHANES HAUTEMENT FONCTIONALISES

(30) Priorität: 01.07.1995 DE 19524045
(43) Veröffentlichungstag der Anmeldung: 22.04.1998
(73) Patentinhaber: BASF AKTIENGESELLSCHAFT, 67056 Ludwigshafen (DE)
(72) Erfinder: BRUCHMANN, Bernd, D-67069 Ludwigshafen (DE); WINGERTER, Frank, D-67063 Ludwigshafen (DE); GRAF, Hermann, D-67112 Mutterstadt (DE); WOLFF, Stefan, D-67117 Limburgerhof (DE)
(86) Internationale Anmeldenummer: EP9602705
(87) Internationale Veröffentlichungsnummer: WO9702304

(56) Entgegenhaltungen:
- EP-A- 0 115 771

## Beschreibung

Die Erfindung betrifft hochfunktionelle, dendritische Polyurethane, ihre Herstellung sowie Monomere zur Herstellung derartiger Polyurethane.

Hochfunktionalisierte Moleküle, sogenannte Dendrimere oder Arborole, und hochverzweigte Polymere, auch als Hyperbranched Polymers bezeichnet, finden in jüngerer Zeit zunehmend Interesse in der Chemie und Pharmazie.

Als Dendrimere werden dreidimensionale, hoch geordnete, hochverzweigte oligomere und polymere Verbindungen bezeichnet, die, ausgehend von kleinen Molekülen, durch eine sich ständig wiederholende Reaktionsfolge entstehen. Dabei entstehen immer höhere Verzweigungen, an deren Ende sich jeweils funktionelle Gruppen befinden, die wiederum Ausgangspunkt für weitere Verzweigungen sind.

Eine Beschreibung von Dendrimeren befindet sich in D.A. Tomalia, A.M. Naylor, W.A. Goddard III, Angew. Chem., 1990, 102, 119-157.

Ein hochverzweigtes Polyurethan ist in R. Spindler, J.M.J. Fréchet, J. Chem Soc. Perkin Trans. I, 1993, 913, beschrieben.

Das dort verwendete Monomer hat die Strukturformel

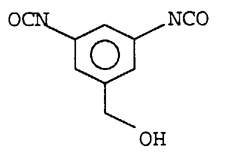

Aus diesem Monomer kann durch eine Polyadditionsreaktion ein Isocyanat-terminiertes, hochverzweigtes Polyurethan hergestellt werden.

Problematisch ist hierbei die Herstellung des Monomeren. Als Ausgangsprodukt dient eine Verbindung mit folgender Struktur:

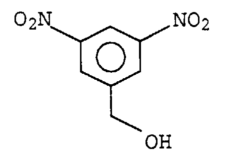

Zunächst wird die Hydroxylgruppe mit tert.-Butyldiphenylsilylchlorid blockiert, und die Nitrogruppen durch Hydrierung und anschließende Phosgenierung in Isocyanatgruppen überführt, welche mit Phenol blockiert werden. Zur Durchführung der Polyadditionsreaktion werden die Blockierungsmittel entfernt. Durch die Notwendigkeit der Entfernung des Phenols und die Verwendung des sehr teuren tert.-Butyldiphenylsilylchlorids ist die beschriebene Herstellung der hochverzweigten Polyurethane unwirtschaftlich.

A. Kumar und S. Ramachrishnan, J. Chem. Soc., Chem. Commun. 1993, 1453, beschreiben hochverzweigte Polyurethane, die aus Monomeren folgender Struktur hergestellt werden:

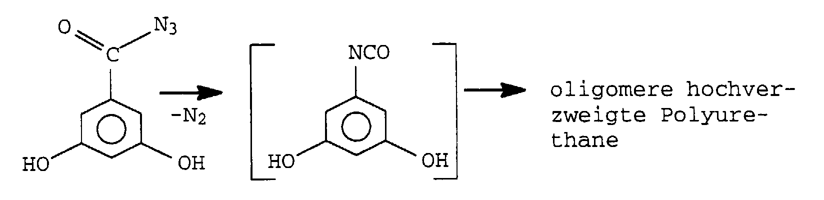

Das Säureazid eliminiert bei Erwärmung Stickstoff, durch Umlagerung entsteht intermediär das Isocyanat, das zu einem hydroxylterminierten Polyurethan weiterreagiert.

Auch hier ist das Ausgangsmonomer schwierig herzustellen, denn Säureazide zersetzen sich leicht und unter teilweise heftigen Reaktionen, außerdem ist die Urethangruppe aus Isocyanat und phenolischer Hydroxylgruppe thermisch nicht stabil.

Aufgabe der Erfindung war es, dendrimere Polyurethane bereitzustellen, die aus leicht zugänglichen Monomeren durch einfache Verfahrensschritte reproduzierbar hergestellt werden können.

Die Aufgabe der Herstellung dendrimerer Polyurethane wurde gelöst durch Umsetzung von Monomeren mit einer NCO-Gruppe und mit n mit NCO reaktiven Gruppen oder einer mit NCO reaktiven Gruppe und n NCO-Gruppen, wobei mit NCO reaktive Gruppen insbesondere Mercapto-, vorzugsweise jedoch Amino- oder Hydroxylgruppen sind und n im Bereich von 2 bis 5, insbesondere 2 bis 4 liegt und besonders bevorzugt gleich 2 bis 3 ist.

Der Unterschied zwischen hochverzweigten und dendrimeren Polyurethanen besteht darin, daß dendrimere Polyurethane, ausgehend von einem Initiatorkern, in definierten Reaktionsstufen (Generationen) schalenförmig aufgebaut werden und eine definierte Molmasse aufweisen, hochverzweigte Polyurethane dagegen regellos aufgebaut sind und eine Molvmassenverteilung aufweisen.

Diese Strukturunterschiede sollen an folgenden schematischen Darstellungen verdeutlicht werden:
Hochverzweigtes Polyurethan aus AB₂-Monomeren: 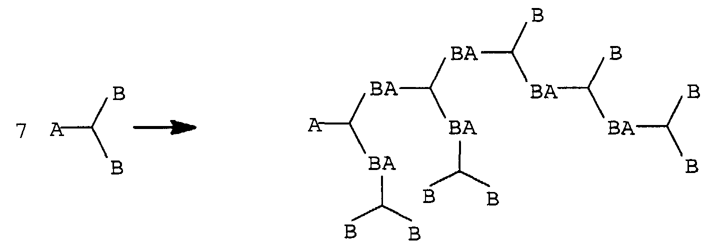
Polyurethan-Dendrimer aus Initiatorkern I und AB₂-Monomeren:

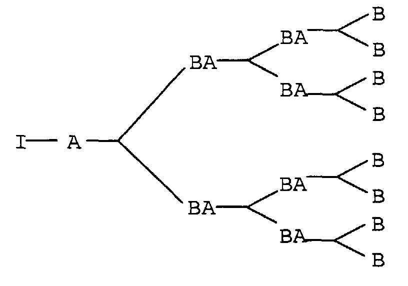

Dabei können, für den vorliegenden Fall, A und B eine Hydroxyl- oder Isocyanatgruppe, BA eine Urethangruppe und I den Initiatorkern bedeuten. An den Initiatorkern I können je nach Funktionalität auch mehrere der gezeigten Dendrimerzweige angebracht werden.

Zur Herstellung der erfindungsgemäßen Verbindungen ist es zunächst nötig, Monomere vom Typ ABₙ herzustellen, wobei A und B jeweils eine Isocyanatgruppe und eine mit ihr reaktionsfähige H-funktionelle Gruppe bedeuten und n eine natürliche Zahl ≧ 2, insbesondere gleich 2 oder 3, ist.

Beispielhaft soll zunächst die Herstellung eines AB₂-Monomeren auf Basis von 2,4-Toluylendiisocyanat (TDI) und Trimethylolpropan beschrieben werden.

Zunächst wird eine der NCO-Gruppen des TDI auf an sich bekannte Weise verkappt. Das kann beispielsweise durch Uretdionisierung, Umsetzung mit einem Oxim, einem Phenol oder einem anderen geeigneten Blockierungsmittel erfolgen. Auf Grund der unterschiedlichen Reaktivität der beiden NCO-Gruppen wird im Falle des 2,4-TDI bevorzugt die in 4-Stellung befindliche NCO-Gruppe blockiert.

Die freie NCO-Gruppe kann mit einer mindestens 3 H-funktionelle Gruppen enthaltenden Verbindung, beispielsweise Trimethylolpropan, Glycerin oder einem Alkanolamin, wie Diethanolamin, umgesetzt werden.

Nach Abspalten des Verkappungsmittels entsteht ein Molekül mit 2 Hydroxylgruppen und einer NCO-Gruppe, das zu dendrimeren Polyurethanen umgesetzt werden kann.

In analoger Weise, das heißt durch Verkappung eines Teils der Isocyanatgruppen und Umsetzung des anderen Teils mit mindestens 3 H-funktionelle Gruppen enthaltenden Verbindungen, können prinzipiell alle aliphatischen und aromatischen Di- oder Polyisocyanate zu Monomeren mit einer NCO- und mindestens 2 H-funktionellen Gruppen umgesetzt werden. Besonders geeignete Isocyanate sind 2,4-Toluylendiisocyanat (2,4-TDI), 2,6-Toluylendiisocyanat (2,6-TDI), 2,4'-Diphenylmethandiisocyanat (2,4'-MDI), 4,4'-Diphenylmethandiisocyanat (4,4'-MDI), 1,5-Naphthylendiisocyanat (NDI), 1,4-Phenylendiisocyanat, 1,3-Tetramethylxylylendiisocyanat (TMXDI), hydriertes MDI (HMDI), Isophorondiisocyanat (IPDI) Hexamethylendiisocyanat-1,6 (HDI), 2-Isocyanatopropylcyclohexylisocyanat (IPCI), 2-Butyl-2-ethyl-pentaethylendiisocyanat (BEPDI), Lysindiisocyanat (LDI), 1,12-Dodecyldiisocyanat, Cyclohexyl-1,3- oder 1,4-diisocyanat, 2-Methylpentamethylendiisocyanat (MPDI).

Umgekehrt ist es ebenso möglich, ABₙ-Monomere herzustellen, indem bei einer mindestens 2 H-funktionelle Gruppen enthaltenden Verbindung mindestens eine der H-funktionellen Gruppen verkappt und die freien H-funktionellen Gruppen mit Isocyanatgruppen umgesetzt werden.

Die Verkappung kann im Falle von mehrfunktionellen Alkoholen beispielsweise durch Acetal- oder Ketalbildung erfolgen. So können beispielsweise zwei Hydroxylgruppen von Trimethylolpropan oder Glycerin durch Umsetzung mit Aceton verkappt und die freie Hydroxylgruppe mit einer Isocyanatgruppe umgesetzt werden.

Wenn man ein derartig verkapptes Triol mit 2,4-Toluylendiisocyanat (TDI), bei dem die in 4-Stellung befindliche NCO-Gruppe blockiert ist, z.B. durch Uretdionisierung oder durch Umsetzung mit einem Oxim, z.B. Acetonoxim, reagieren läßt, erhält man mit hoher Selektivität ein Monomeres mit zwei Hydroxylgruppen und einer blockierten NCO-Gruppe. Die Reaktion soll unter Verwendung von Trimethylolpropan (TMP), Aceton, 2,4-TDI und Acetonoxim schematisch dargestellt werden:

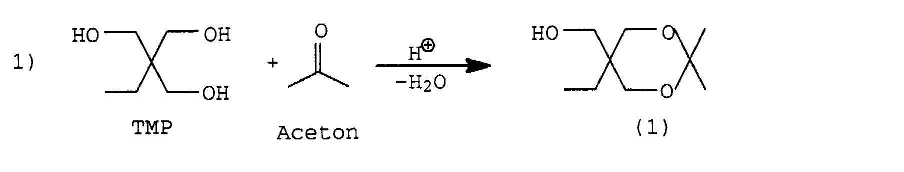

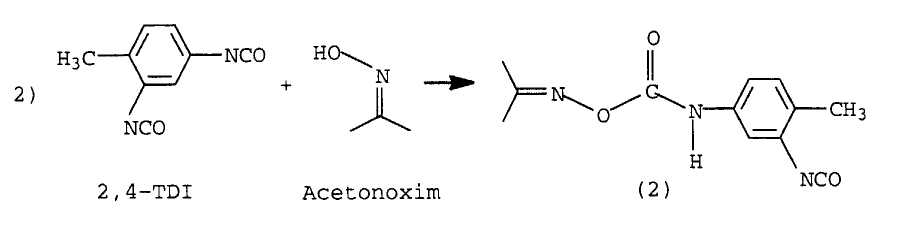

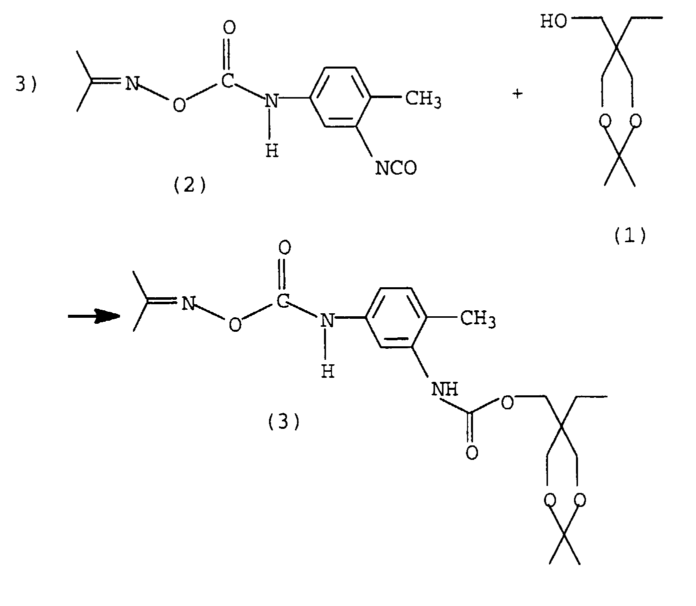

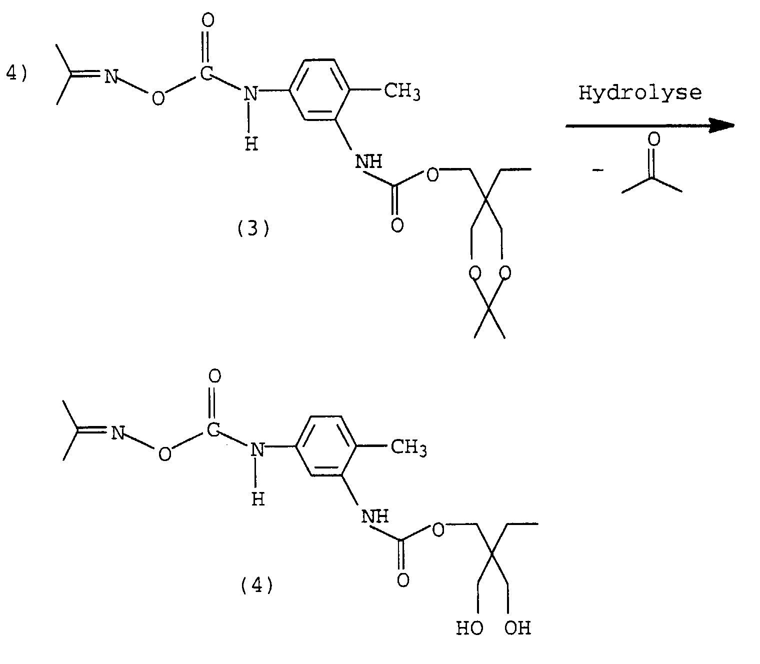

Im ersten Schritt wird aus TMP und Aceton das geschützte Triol (1) hergestellt, d.h., es werden 2 Hydroxylgruppen verkappt. Im zweiten Schritt, wobei hier "erster und zweiter Schritt" nicht als zeitliche Abfolge aufgefaßt werden soll, wird eine NCO-Gruppe von 2,4-TDI mit Acetonoxim blockiert, es entsteht das Monoisocyanat (2).

Diese beiden Ausgangsverbindungen werden zu einer Verbindung mit 2 verkappten Hydroxylgruppen und einer verkappten Isocyanatgruppe umgesetzt (3).

Durch Hydrolyse können die Hydroxylgruppen wieder zugänglich gemacht werden (4), es entsteht ein Monomer, welches nach Freisetzung der Isocyanatgruppe zu hochverzweigten oder dendrimeren Polyurethanen umgesetzt werden kann.

Alternativ zu einem verkappten Trimethylolpropan lassen sich auch verkapptes Glycerin, N-Hydroxyalkyl-oxazolidine oder Dialkanolamine verwenden. Bei Dialkanolaminen reagiert bevorzugt die NH-Gruppe, so daß auf eine Verkappung der OH-Gruppen verzichtet werden kann.

Die Reaktionen verlaufen mit hoher Selektivität.

Ein isomer aufgebautes Monomer kann durch Umsetzung von mit Aceton verkapptem TMP mit 2,4-TDI erhalten werden.

Die Reaktion verläuft nach folgender Gleichung:

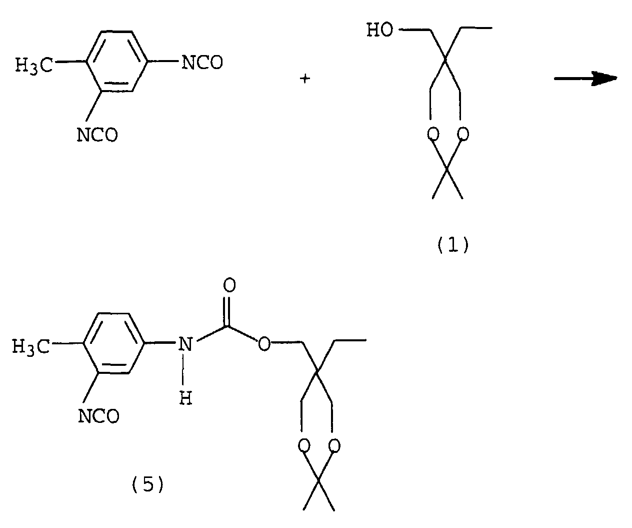

Auf Grund der höheren Reaktivität der in der 4-Stellung befindlichen NCO-Gruppen verläuft auch diese Umsetzung sehr selektiv.

Die freie NCO-Gruppe in Verbindung (5) sollte nach der Umsetzung ebenfalls, z.B. mit Oxim, blockiert werden, um die Hydrolyse des Dioxanringes zu ermöglichen, ohne daß es zu einer Reaktion der Monomeren untereinander kommt. Nach Hydrolyse des Dioxanringes erhält man ein isomer zu (4) aufgebautes AB₂-Monomer.

Die so verkappten Monomeren sind bei Raumtemperatur über Wochen lagerstabil.

Zur Herstellung der erfindungsgemäßen dendrimeren Polyurethane werden die funktionellen Gruppen der Monomeren aktiviert, um die Reaktion zu ermöglichen.

Bei der Herstellung der erfindungsgemäßen dendrimeren Polyurethane sind die konvergente und die divergente Methode zu unterscheiden.

Bei der divergenten Methode werden, ausgehend von einem Initiatorkern, die Monomeren Generation für Generation um diesen herum angelagert.

Dabei muß durch Schutzgruppen bei den Monomeren sichergestellt sein, daß die Monomeren nur mit den funktionellen Gruppen des Initiatorkerns bzw. des Dendrimeren und nicht miteinander reagieren.

Bei der konvergenten Methode werden zunächst die einzelnen Äste synthetisiert, die anschließend an einen Initiatorkern angekoppelt werden.

Beispielhaft soll der divergente Aufbau eines Dendrimeren mit TMP als Initiatorkern und dem oben beschriebenen Monomeren aus TMP und 2,4-TDI anhand der Strukturformeln gezeigt werden:

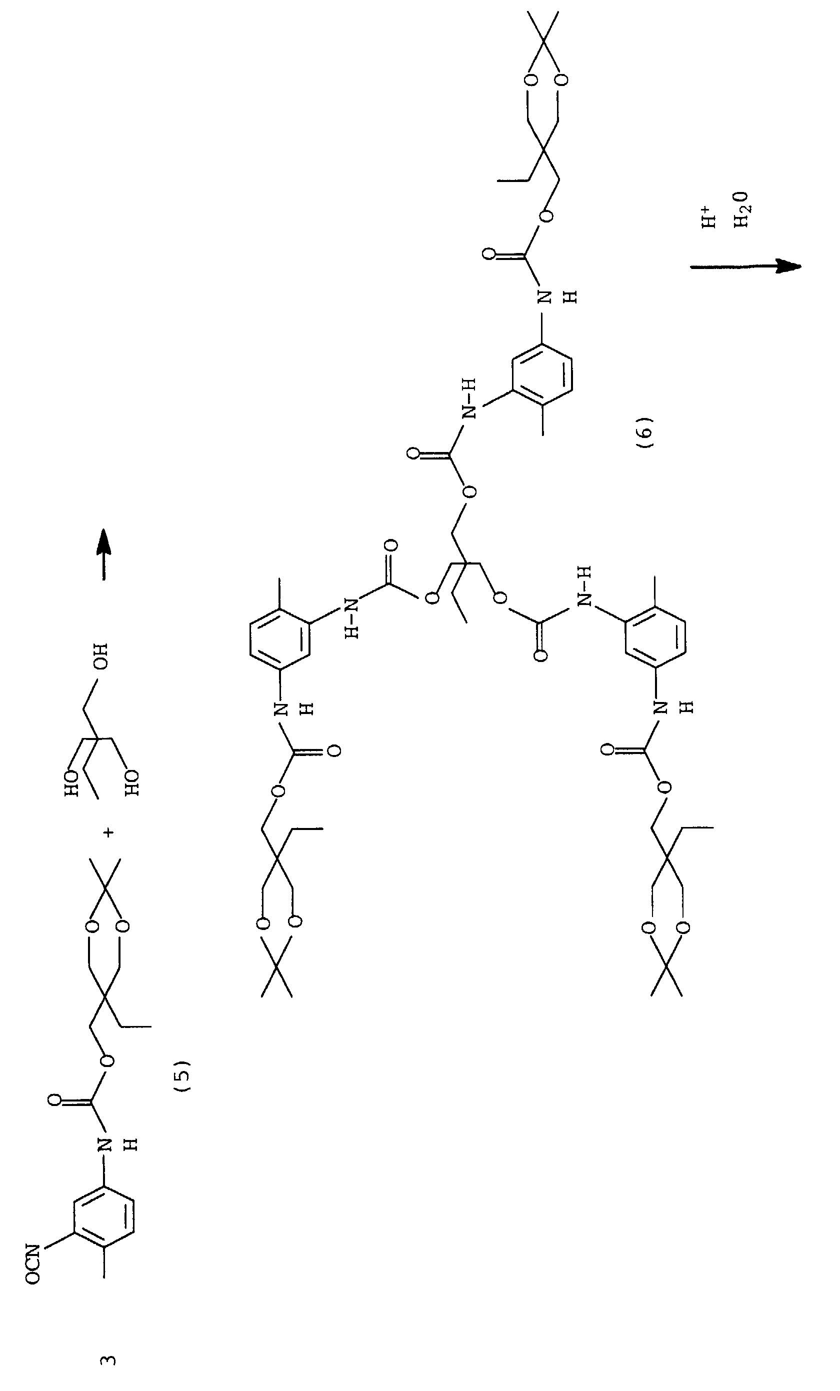

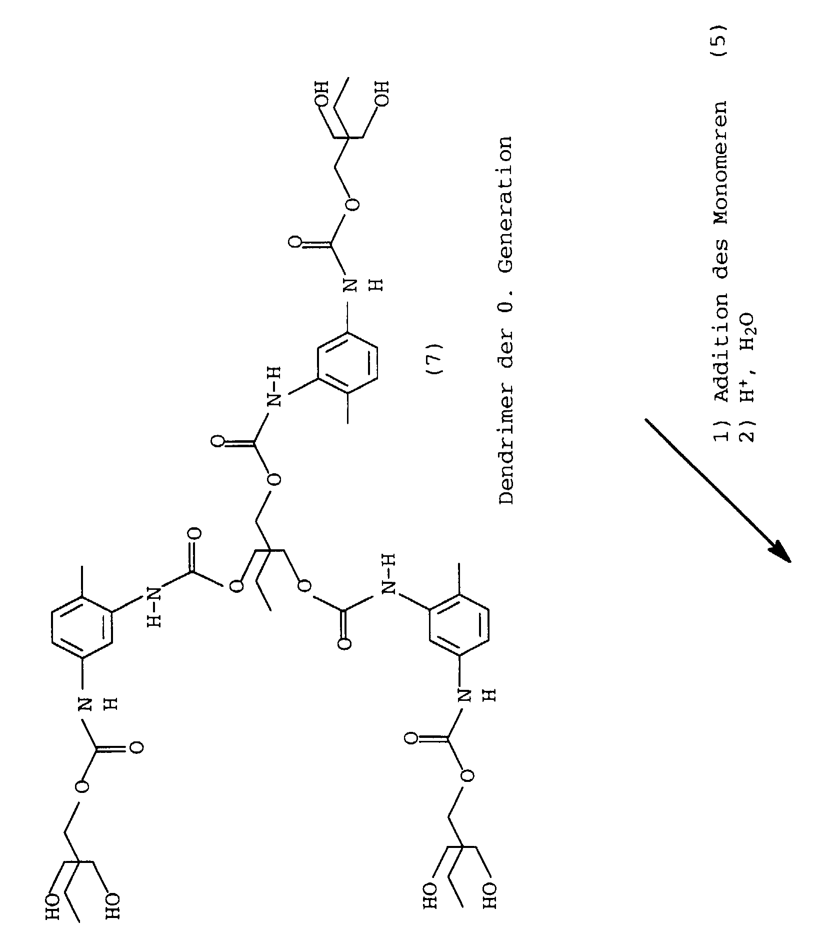

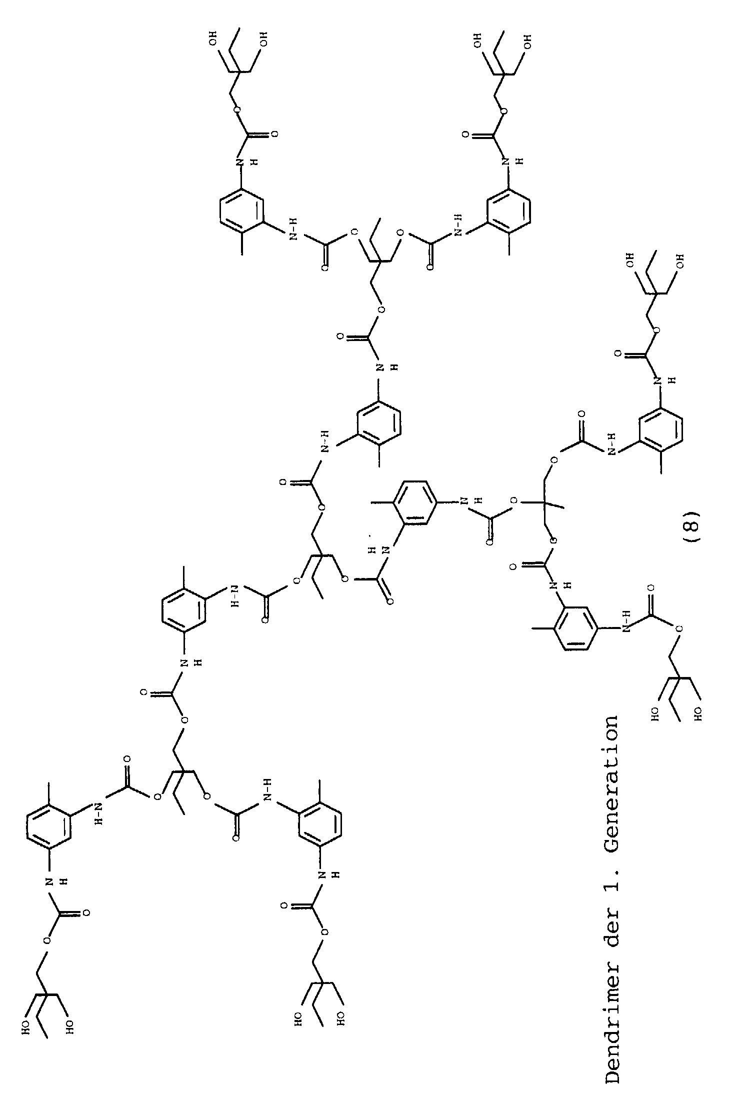

Durch Anlagerung von weiteren Monomeren (5) an die freien Hydroxylgruppen des Dendrimeren können weitere Generationen des Dendrimeren synthetisiert werden. Durch den regelmäßigen Aufbau der Dendrimermoleküle kann die für den Aufbau einer jeden Generation benötigte Menge an Monomeren genau berechnet und zur Synthese eingesetzt werden.

Zum Aufbau von Dendrimeren mit einer definierten Struktur ist es vorteilhaft, nach der Synthese einer jeden Generation das Reaktionsprodukt zu isolieren, zu reinigen und das so behandelte Produkt zur Synthese der nächsten Generation einzusetzen. Die Herstellung der dendrimeren Polyurethane erfolgt vorteilhafterweise in Lösung, wobei die oben genannten Lösungsmittel eingesetzt werden können.

Zur Beschleunigung der Umsetzung können die oben genannten Urethanisierungskatalysatoren eingesetzt werden.

Ein konvergenter Aufbau von dendrimeren Polyurethanen, das heißt eine Synthese der Äste, die anschließend an einen Initiatorkern angelagert werden, ist nach dem gleichen prinzipiellen Weg möglich.

Bei Verwendung des oben beschriebenen Monomeren würde bei einem konvergenten Aufbau des dendrimeren Polyurethans als Startermolekül ein Monomerbaustein mit zwei OH-Gruppen und einer verkappten NCO-Gruppe verwendet werden, beispielsweise Molekül (4), und das Monomer (5) generationsweise aufgepfropft. Die Anlagerung der weiteren Monomeren erfolgt wie oben beschrieben. Die so synthetisierten Äste mit den blockierten Hydroxylgruppen können nach Aktivierung der NCO-Gruppe des Startmonomeren an einen H-funktionellen Initiatorkern angelagert werden. Nach der Aktivierung der endständigen Hydroxylgruppen entsteht ein Dendrimeres, das in seinem Aufbau den nach dem divergenten Verfahren hergestellten Dendrimeren völlig entspricht.

Die Herstellung von Monomeren des Typs A(B)ₙ, wobei A, B und n die oben beschriebene Bedeutung haben, ist, wie aus der Aufzählung der erfindungsgemäß verwendbaren Isocyanate hervorgeht, auch mit aliphatischen Isocyanaten möglich. Beispielhaft soll hier die Herstellung eines derartigen Monomeren aus 1,6-Hexamethylendiisocyanat (HDI) und verkapptem Trimethylolpropan beschrieben werden. Da die Reaktivität der beiden NCO-Gruppen des HDI gleich ist, sollte zur Herstellung des Monourethans mit einem Unterschuß an verkapptem Alkohol gearbeitet werden. Das Molverhältnis von verkapptem Alkohol zur Diisocyanat sollte mindestens 1:3, insbesondere mindestens 1:5 betragen. Die Umsetzung zum Monourethan verläuft unter diesen Bedingungen mit hoher Selektivität und hoher Ausbeute. Das unumgesetzte Diisocyanat kann auf einfachem Wege, beispielsweise durch Destillation, vom Reaktionsprodukt entfernt werden. Schematisch läßt sich die Darstellung eines solchen Monomers so darstellen:

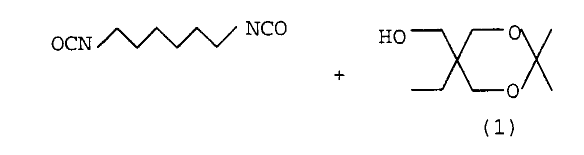

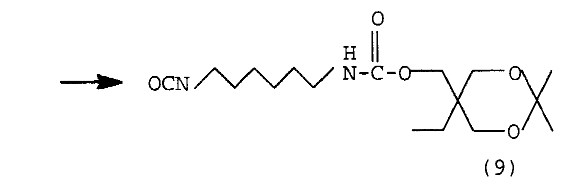

Wie bei den Monomeren auf Basis von TDI gezeigt, läßt sich dieses Molekül direkt an einen H-funktionellen Initiatorkern ankoppeln. Nach Aktivierung der OH-Gruppen erhält man so ein Dendrimer der O. Generation, an das wiederum das Molekül (9) angelagert werden kann. Weiterhin kann durch Blockieren der freien NCO-Gruppe und anschließender Aktivierung der Hydroxylgruppen ein Monomer hergestellt werden, das auf dem gleichen Weg wie beschrieben zu dendrimeren Polyurethanen umgesetzt werden kann.

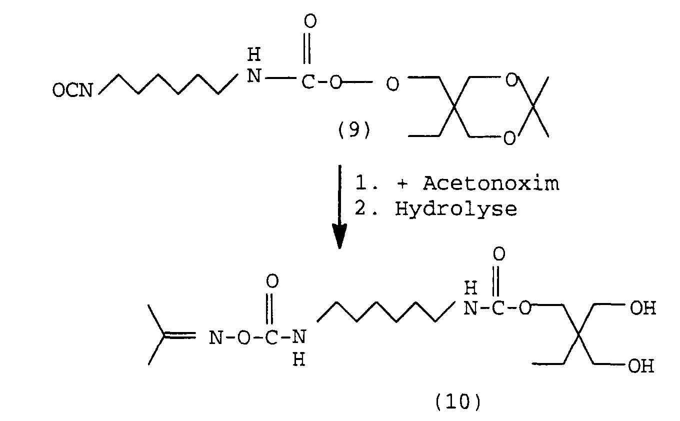

Die dendrimeren Polyurethane können z.B. als hochfunktionelle Vernetzer für Polyurethanlacke und -beschichtungen oder für Polyurethanschäume eingesetzt werden.

Die Erfindung soll an nachstehenden Beispielen näher erläutert werden.

### Beispiel 1

### Herstellung des Aceton-verkappten Trimethylolpropans (Isopropyliden-TMP, (1))

250 g (1863 mmol) Trimethylolpropan wurden mit 750 ml Aceton, 750 ml Petrolether 30/75 und 0,15 g p-Toluolsulfonsäure-Monohydrat 25 Stunden unter Rückfluß gehalten. Danach wurde über eine 50 cm-Füllkörperkolonne 21 Stunden das Wasser entfernt. Anschließend wurde die Lösung auf Raumtemperatur abgekühlt, 0,5 g Natriummethanolat zugegeben und 1 Stunde bei Raumtemperatur gerührt. Danach wurde die Lösung filtriert, überschüssiges Lösungsmittel im Rotationsverdampfer abgezogen und der Rückstand über eine 15 cm-Vigreux-Kolonne im Vakuum destilliert.

Das Reaktionsprodukt war eine farblose Flüssigkeit mit einem Siedepunkt bei 71 bis 72°C (0,5 mbar). Die Ausbeute betrug 254 g ≙ 78 %.

### Beispiel 2

### Herstellung des Monourethans aus 2,4-TDI und Acetonoxim (2)

232 g 2,4-Toluylendiisocyanat (1334 mmol) wurden in 1330 ml getrocknetem Aceton unter Stickstoffatmosphäre vorgelegt. 48,7 g Acetonoxim (667 mmol) wurden in 450 ml getrocknetem Aceton gelöst und innerhalb von 8 Stunden in die Reaktionslösung bei Raumtemperatur zugetropft. Die Lösung wurde über Nacht stehengelassen und am nächsten Tag im Rotationsverdampfer eingedampft. Das entstandene kristalline Produkt wurde in Aceton umkristallisiert und anschließend mit Petrolether gewaschen. Es entstand ein farbloser Feststoff mit einem Schmelzpunkt von 109 bis 111°C. Die Ausbeute betrug 89,2 g (54 %).

### Beispiel 3

### Herstellung des Monourethans aus 2,4-TDI und Isopropyliden-TMP (5)

87,8 g (504 mmol) 2,4-Toluylendiisocyanat wurden in 300 ml Petrolether 30/75 vorgelegt. 44,0 g des Produktes aus Beispiel 1 wurden in 80 ml Petrolether 30/75 gelöst und unter Stickstoffatmosphäre innerhalb von 8 Stunden bei Raumtemperatur zugetropft. Die Lösung wurde über Nacht bei Raumtemperatur stehengelassen und am nächsten Tag abgesaugt. Der Rückstand wurde zweimal mit Petrolether gewaschen und im Vakuum getrocknet. Es entstand ein farbloser Feststoff mit einem Schmelzpunkt von 135 bis 137°C. Die Ausbeute betrug 81,2 g (92 %).

### Beispiel 4

### Herstellung des Diurethans aus 2,4-TDI, Isopropyliden-TMP und Acetonoxim (Isomer zu (3))

30,0 g des Reaktionsproduktes aus Beispiel 3 wurden in 500 ml getrocknetem Aceton gelöst. Dazu wurde eine Lösung von 6,29 g Acetonoxim in 100 ml getrocknetem Aceton unter einer Stickstoffatmosphäre innerhalb von 2 Stunden zugetropft. Danach wurde die Lösung 2 Stunden bei Raumtemperatur gerührt und anschließend im Rotationsverdampfer bei 35°C eingedampft. Der Rückstand wurde mit Petrolether 30/75 gewaschen und danach unter Vakuum getrocknet. Es entstand ein farbloser Feststoff, der bei längerem Stehenlassen zerfließt. Die Ausbeute betrug 30,5 g (83 %).

### Beispiel 5

### Herstellung des Diurethans aus 2,4-TDI, Acetonoxim und Isopropyliden-TMP (3)

20 g des Reaktionsproduktes aus Beispiel 2 und 14.1 g des Reaktionsproduktes aus Beispiel 1 wurden zusammen in 160 ml getrocknetes Aceton gegeben, 8 µl Di-n-butylzinndilaurat zugegeben und die Lösung 16 Stunden bei 45°C gerührt. Danach wies das IR-Spektrum keine NCO-Bande mehr auf. Die Lösung wurde im Rotationsverdampfer bei 35°C eingedampft und der Rückstand in Petrolether 30/75 angerieben. Die entstehende pastöse Masse wurde mit Petrolether 30/75 gewaschen und anschließend im Vakuum getrocknet. Es entstanden 26,9 g (≙ 79 %) eines farblosen, hygroskopischen Feststoffs.

### Beispiel 6

### Herstellung des Urethan-Diols (4)

15,2 g des Reaktionsproduktes aus Beispiel 5 wurden in 190 ml Methanol gelöst und zu dieser Lösung 45 ml Wasser und 0,04 g Oxalsäure gegeben. Die Lösung wurde 72 h bei Raumtemperatur gerührt. Danach wurde aus der Lösung im Rotationsverdampfer bei 30°C das Methanol abgezogen. Der wäßrige Rückstand wurde mit Essigsäureethylester extrahiert, die Essigsäureethylesterphase über Nacht mit Natriumsulfat getrocknet und im Rotationsverdampfer eingedampft. Es entstand ein gelblicher Feststoff mit einem Schmelzpunkt von 53 bis 55°C. Die Ausbeute betrug 8,8 g (64 %).

### Beispiel 7

### Herstellung des zu (4) isomeren Urethandiols

30,0 g des Produkts gemäß Beispiel 4 wurden in 80 ml Methanol gelöst und zu dieser Lösung 20 ml Wasser und 0,09 g Oxalsäure gegeben. Die Lösung wurde 24 h bei Raumtemperatur gerührt. Danach wurde aus der Lösung im Rotationsverdampfer bei 30°C das Methanol weitgehend abgezogen. Der wäßrige Rückstand wurde mit Essigsäureethylester extrahiert, die Essigsäureethylesterphase über Nacht mit Natriumsulfat getrocknet und im Rotationsverdampfer eingedampft. Es entstand ein gelblicher Feststoff mit einem Schmelzpunkt von 54 bis 56°C. Die Ausbeute betrug 14,6 g (54 %).

### Beispiel 8

### Herstellung des Urethan-Diols aus 2,4-TDI, Acetonoxim und Diethanolamin

6,37 g (60,6 mmol) Diethanolamin wurden in 100 ml getrocknetem Aceton gelöst. Dazu wurde unter Stickstoffatmosphäre eine Lösung von 15,0 g (60,6 mmol) des Reaktionsproduktes aus Beispiel 2 in 120 ml getrocknetem Aceton innerhalb von 2 h bei Raumtemperatur zugetropft. Die Lösung wurde 1 h bei Raumtemperatur nachgerührt und über Nacht stehengelassen. Danach wurde filtriert, die Lösung bei 35°C im Rotationsverdampfer eingedampft und der Rückstand in ein wenig trockenem Aceton aufgenommen. Die entstandene Lösung wurde mit wenig Petrolether 30/75 überschichtet und bei 3°C über Nacht stehengelassen. Das auskristallisierte Produkt wurde abgesaugt und im Vakuum getrocknet. Es entstand ein farbloser Feststoff, die Ausbeute betrug 9,6 g (45 %).

### Beispiel 9

### Herstellung eines Dendrimers der 0. Generation aus 2,4-TDI und Isopropyliden-TMP (6)

20,0 g des Monourethans (5) aus Beispiel 3 wurden in 100 ml getrocknetem Aceton bei 40°C gelöst, 2,57 g Trimethylolpropan und 5 µl Di-n-butyl-zinndilaurat zugegeben. Die Lösung wurde unter Stickstoffatmosphäre 6 h am Rückfluß gehalten. Danach war im IR-Spektrum der Lösung keine NCO-Bande mehr vorhanden.

Die Lösung wurde vor dem Abkühlen filtriert und danach im Rotationsverdampfer bei 45°C eingedampft. Das erhaltene gelbliche Öl wurde über Nacht bei Raumtemperatur stehengelassen. Danach war es hochviskos und kristallisierte beim Anreiben in Petrolether 30/75 aus. Der Feststoff wurde mit Petrolether 30/75 gewaschen und im Vakuum getrocknet. Es entstanden 15,6 g eines farblosen Feststoffs.

### Beispiel 10

### Herstellung des Dendrimers der 0. Generation aus 2,4-TDI und TMP durch Aktivierung der OH-Gruppe (7)

12 g des Produktes (6) aus Beispiel 9 wurden in 80 ml Methanol gelöst und zu dieser Lösung 20 ml Wasser und 2 ml 0,1-molare Salzsäure gegeben. Diese Lösung wurde 72 h bei Raumtemperatur stehengelassen, mit Natriumcarbonat neutralisiert, filtriert und danach das Methanol im Rotationsverdampfer bei 30°C entfernt. Der wäßrige Rückstand wurde mit Essigsäureethylester extrahiert, die Essigsäureethylesterphase über Natriumsulfat getrocknet und im Rotationsverdampfer bei 30°C bis zur Trockene eingedampft. Es entstanden 5,4 g eines gelblichen Feststoffes.

### Beispiel 11

### Herstellung des Dendrimers der 1. Generation aus 2,4-TDI und TMP (8)

4,00 g des Reaktionsprodukts (7) aus Beispiel 9 und 7,90 g Reaktionsprodukt aus Beispiel 3 wurden zusammen in 50 ml getrocknetem Aceton gelöst, 2,5 µl Di-n-butyl-zinndilaurat zugegeben und unter Stickstoffatmosphäre 4 h bei 50°C gerührt. Danach war im IR-Spektrum der Lösung keine NCO-Bande mehr vorhanden.

Die Lösung wurde bei 35°C im Rotationsverdampfer eingedampft, der Rückstand in 80 ml Methanol aufgenommen, 5 ml Wasser und 1 ml 1 M Salzsäure zugegeben und die Lösung bei Raumtemperatur über Nacht stehengelassen. Danach wurde ein Überschuß Natriumcarbonat zugegeben, die Lösung filtriert und das Methanol im Rotationsverdampfer bei 30°C entfernt. Der wäßrige Rückstand wurde mit Essigsäureethylester extrahiert, die Essigsäureethylesterphase über Natriumsulfat getrocknet und im Rotationsverdampfer bei 30°C zur Trockene rotiert. Das Reaktionsprodukt war ein gelblicher Feststoff. Die Ausbeute betrug 5,8 g.

### Beispiel 12

### Herstellung des Dendrimers der 2. Generation aus 2,4-TDI und TMP

4,00 g Reaktionsprodukt aus Beispiel 11 und 5,75 g Reaktionsprodukt aus Beispiel 3 wurden in 70 ml Aceton gelöst, 3,5 µl Di-n-butyl-zinndilaurat zugegeben und unter Stickstoffatmosphäre 3 h bei 50°C gerührt. Danach war im IR-Spektrum der Lösung keine NCO-Bande mehr vorhanden. Die Lösung wurde bei 35°C im Rotationsverdampfer bis zur Trockene eingedampft.

2,00 g des Rückstandes wurden in 80 ml Methanol gelöst und 5 ml Wasser und 1 ml 1 M Salzsäure zugegeben. Diese Lösung wurde 24 h bei Raumtemperatur gerührt. Danach wurde ein Überschuß Natriumcarbonat zugegeben, filtriert und das Methanol im Rotationsverdampfer bei 30°C entfernt.

Der wäßrige Rückstand wurde mit Essigsäureethylester extrahiert, die Essigsäureethylesterphase über Natriumsulfat getrocknet und im Rotationsverdampfer bei 30°C bis zur Trockene eingedampft. Das Reaktionsprodukt war ein gelblicher Feststoff. Die Ausbeute betrug 0,6 g.

### Beispiel 13

### Herstellung eines Monourethans aus HDI und Isopropyliden-TMP (9)

1680 g (10 mol) HDI und 0,84 g Dibutylzinndilaurat wurden unter Stickstoffbedeckung und Rühren auf 50°C erwärmt. Bei dieser Temperatur wurden innerhalb von 30 Minuten unter Rühren 348 g des Reaktionsprodukts aus Beispiel 1 zugetropft. Nach Beendigung der Zugabe wurde die Reaktionsmischung noch 30 Minuten bei dieser Temperatur belassen. Danach wurde die Reaktionsmischung durch Destillation am Dünnschichtverdampfer bei 165°C und 2,5 mbar vom monomeren HDI befreit.

Das Reaktionsprodukt wies folgende Kennwerte auf:
Reinheit: 88.6 % (Flächen-% nach GPC)
NCO-Gehalt: 12,3 Gew.-%
Viskosität bei 25°C: 1200 mPa·s
Restmonomerengehalt: < 0,2 Gew.-%.

### Beispiel 14

### Herstellung eines Monourethans aus HDI und Isopropyliden-Glycerin

Es wurde verfahren wie in Beispiel 13, nur wurde anstelle des Reaktionsprodukts aus Beispiel 1 264 g (2 mol) Isopropyliden-Glycerin (Firma Fluka AG) zugegeben.

Das Reaktionsprodukt wies folgende Kennzahlen auf:
Reinheit: 89 % (Flächen-% nach GPC)
NCO-Gehalt: 13,7 Gew.-%
Viskosität bei 25°C: 174 mPa·s
Restmonomerengehalt: < 0,2 Gew.-%

### Beispiel 15

### Herstellung des Diurethans aus HDI, Isopropyliden-TMP und Acetonoxim

100 g Reaktionsprodukt aus Beispiel 13 und 50 mg Dibutylzinndilaurat wurden vorgelegt und dazu unter Rühren und Stickstoffbedeckung innerhalb von 15 Minuten die äquimolare Menge Acetonoxim, gelöst in trockenem Aceton, bei Raumtemperatur zugetropft und nach Beendigung der Dosierung noch eine Stunde bei Raumtemperatur gerührt. Danach wurde das Aceton am Rotationsverdampfer entfernt und das Reaktionsprodukt mittels Säulenchromatographie an Kieselgel mit Essigester als Laufmittel gereinigt. Das Reaktionsprodukt wies bei 23°C eine Viskosität von 2140 mPas auf.

### Beispiel 16

### Herstellung des Diurethans aus HDI, Isopropyliden-Glycerin und Acetonoxim

Es wurde verfahren wie in Beispiel 15, nur daß anstelle des Reaktionsproduktes aus Beispiel 13 100 g Reaktionsprodukt aus Beispiel 17 eingesetzt wurden.

### Beispiel 17

### Herstellung des Urethan-Diols (10)

20 g des Reaktionsprodukts aus Beispiel 15 wurden vorgelegt und dazu eine Mischung aus 100 ml Methanol, 20 ml Wasser und 15 ml 0,1 molarer Salzsäure gegeben. Diese Mischung wurde 8 Stunden bei 30°C gerührt und über Nacht stehengelassen. Anschließend wurde dreimal mit je 50 ml Essigester ausgeschüttelt. Die vereinigten Essigester-Extrakte wurden mit 20 ml 0,1-molarer Natriumcarbonat-Lösung und danach mit 2 mal 20 ml Wasser gewaschen. Nach Abtrennung der wäßrigen Phase wurde über Natriumsulfat getrocknet. Nach Entfernung des Essigesters wurde das NCO-verkappte Diol gewonnen. Die Hydrolyse erfolgte quantitativ.
Viskosität bei 23°c: 1070 mPas

### Beispiel 18

### Herstellung des Urethan-Diols aus HDI, Acetonoxim und Glycerin

Es wurde verfahren wie in Beispiel 17, nur daß anstelle des Reaktionsprodukts aus Beispiel 18 20 g des Reaktionsprodukts aus Beispiel 19 eingesetzt wurde.
Viskosität bei 23°C: 4740 mPas

### Beispiel 19

### Herstellung eines Dendrimeren der 0. Generation aus HDI und Isopropyliden-TMP mit TMP als Initiatorkern

1 Mol des Reaktionsproduktes aus Beispiel 13 und 50 ml trockenes Methylethylketon wurden vorgelegt und auf 70°C erwärmt. Unter Rühren und Stickstoffbedeckung wurde innerhalb von 15 Minuten die Lösung von 0,3 mol Trimethylolpropan in 150 ml Methylethylketon zugegeben und 90 Minuten bei 70°C weitergerührt.

Anschließend wurde das Lösungsmittel am Rotationsverdampfer entfernt und der Rückstand an Kieselgel mit Essigester als Laufmittel chromatographiert.

Es entstand ein Dendrimer der 0. Generation mit verkappten Hydroxylgruppen und folgenden Kennwerten.

Viskosität 2140 mPa·s (50°C in 10 Gew.-% Butylacetat)
Elementaranalyse: C₅₇H₁₀₄O₁₈
Ber: C: 58,97; H: 8,97; N: 7,24
Gef: C: 58,70; H: 9,18; N: 6,98

### Beispiel 20

### Herstellung des Dendrimers der 0. Generation aus HDI und TMP durch Aktivierung der OH-Gruppen

10 g des Reaktionsproduktes aus Beispiel 19 wurden mit 30 ml Methanol, 60 ml Wasser und 13 ml 1-molarer Salzsäure versetzt und 8 Stunden unter Rückfluß gerührt. Anschließend wurde das Methanol am Rotationsverdampfer entfernt, der Rückstand in 100 ml Methylethylketon aufgenommen, zunächst mit 15 ml wäßriger 1-molarer Natriumcarbonatlösung und anschließend mit 20 ml Wasser gewaschen. Nach Abtrennung der wäßrigen Phase wurde die organische Phase mit Natriumcarbonat getrocknet.

Nach Entfernung des Lösungsmittels entstand ein hydroxyl-terminiertes Dendrimer der 0-Generation.

Viskosität 7110 mPa·S (bei 50°C in 10 Gew.-% Methanol,
Elementaranalyse: C₄₈H₉₂N₆O₁₈
Ber: C: 55,37; H: 8,91; N: 8,07
Gef: C: 55,30; H: 9,01; N: 7,80

## Patentansprüche

1. Verfahren zur Herstellung von hochfunktionalisierten dendritischen Polyurethanen, dadurch gekennzeichnet, daß man an einen Initiatorkern mit mindestens 2 funktionellen Gruppen B' an jede funktionelle Gruppe B' ein Molekül mit den funktionellen Gruppen A(B)ₙ anlagert, wobei A eine NCO-Gruppe oder eine mit einer NCO-Gruppe reaktive Gruppe, B und B' eine NCO-Gruppe oder eine mit einer NCO-Gruppe reaktive Gruppe, A mit B und B' reaktiv und n eine natürliche Zahl und mindestens gleich 2 ist, wobei bei der Anlagerung die funktionellen Gruppen B des anzulagernden Moleküls in eine Form überführt werden, in der sie nicht mit A reagieren können, nach der Anlagerung die funktionellen Gruppen B wieder in die mit A reaktive Form überführt werden, in der gleichen Weise wiederum an jede reaktive Gruppe B ein Molekül mit den funktionellen
Gruppen A(B)ₙ angelagert wird und so fortgefahren wird, bis die gewünschte Funktionalität erreicht oder eine Anlagerung weiterer Moleküle aus sterischen oder anderen Gründen nicht mehr möglich ist.

2. Verfahren nach Anspruch 1, dadurch gekennzeichnet, daß B und B' NCO-Gruppen sind.

3. Verfahren nach Anspruch 2, dadurch gekennzeichnet, daß die NCO-Gruppen durch Blockierung in eine Form überführt werden, in der sie nicht mit den mit NCO-Gruppen reaktiven Gruppen reagieren können.

4. Verfahren nach Anspruch 3, dadurch gekennzeichnet, daß die Blockierung durch Uretdionbildung erfolgt.

5. Verfahren nach Anspruch 3, dadurch gekennzeichnet, daß die Blockierung mittels Oximen erfolgt.

6. Verfahren nach Anspruch 1, dadurch gekennzeichnet, daß die funktionellen Gruppen B und B' mit NCO-Gruppen reaktive Gruppen sind.

7. Verfahren nach Anspruch 6, dadurch gekennzeichnet, daß die funktionellen Gruppen B und B' Aminogruppen sind.

8. Verfahren nach Anspruch 6, dadurch gekennzeichnet, daß die funktionellen Gruppen B und B' Hydroxylgruppen sind.

9. Verfahren nach Anspruch 7, dadurch gekennzeichnet, daß als Initiatorkern Ammoniak oder ein mindestes 2-funktionelles Amin eingesetzt wird.

10. Verfahren nach Anspruch 8, dadurch gekennzeichnet, daß als Initiatorkern ein aliphatisches, cycloaliphatisches oder aromatisches Diol, ein Triol, ein Tetrol oder ein Zuckeralkohol eingesetzt wird.

11. Verfahren nach Anspruch 1, dadurch gekennzeichnet, daß die funktionellen Gruppen B H-funktionelle Gruppen sind.

12. Verfahren nach Anspruch 11, dadurch gekennzeichnet, daß die funktionellen Gruppen B Aminogruppen sind.

13. Verfahren nach Anspruch 11, dadurch gekennzeichnet, daß die funktionellen Gruppen B Hydroxylgruppen sind.

14. Verfahren nach Anspruch 13, dadurch gekennzeichnet, daß die Blockierung der Gruppe B durch Ketalisierung oder Acetalisierung erfolgt.

## Claims

1. A process for preparing highly functionalized dendritic polyurethanes, which comprises adding, to an initiator core having at least 2 functional groups B', a molecule containing the functional groups A(B)ₙ to each functional group B', where A is an NCO group or a group reactive with an NCO group, B and B' are an NCO group or a group reactive with an NCO group, A is reactive with B and B' and n is a positive number and is at least equal to 2, where in the addition the functional groups B of the molecule to be added are converted into a form in which they cannot react with A, after the addition the functional groups B are again converted into the form reactive with A, in the same manner in turn a molecule containing the functional groups A(B)ₙ is added to each reactive group B and the process is continued until the desired functionality is achieved or an addition of further molecules is no longer possible for steric or other reasons.

2. A process as claimed in claim 1, wherein B and B' are NCO groups.

3. A process as claimed in claim 2, wherein the NCO groups are converted by blocking into a form in which they cannot react with the groups reactive with NCO groups.

4. A process as claimed in claim 3, wherein the blocking is carried out by uretdione formation.

5. A process as claimed in claim 3, wherein the blocking is carried out by means of oximes.

6. A process as claimed in claim 1, wherein the functional groups B and B' are groups reactive with NCO groups.

7. A process as claimed in claim 6, wherein the functional groups B and B' are amino groups.

8. A process as claimed in claim 6, wherein the functional groups B and B' are hydroxyl groups.

9. A process as claimed in claim 7, wherein, as initiator core, ammonia or an at least difunctional amine is employed.

10. A process as claimed in claim 8, wherein, as initiator core, an aliphatic, cycloaliphatic or aromatic diol, a triol, a tetrol or a sugar alcohol is employed.

11. A process as claimed in claim 1, wherein the functional groups B are H-functional groups.

12. A process as claimed in claim 11, wherein the functional groups B are amino groups.

13. A process as claimed in claim 11, wherein the functional groups B are hydroxyl groups.

14. A process as claimed in claim 13, wherein the blocking of the group B is carried out by ketalization or acetalization.

## Revendications

1. Procédé pour la préparation de polyuréthanes dendritiques hautement fonctionnalisés, caractérisé en ce qu'on fixe par addition, sur un noyau d'initiateur présentant au moins deux groupes fonctionnels B', sur chaque groupe fonctionnel B', une molécule présentant les groupes fonctionnels A(B)ₙ ; A représentant un groupe NCO ou un groupe réactif avec un groupe NCO, B et B' représentant un groupe NCO ou un groupe pouvant réagir avec un groupe NCO, A étant réactif avec B et B' et n étant un nombre naturel et au moins égal à 2, les groupes fonctionnels B de la molécule à fixer par addition, lors de la fixation par addition, étant transformés en une forme dans laquelle ils ne peuvent plus réagir avec A, en ce que les groupes fonctionnels B sont à nouveau transformés dans la forme réactive avec A après la fixation par addition, en ce qu'on fixe à nouveau par addition, de la même manière, sur chaque groupe réactif B une molécule présentant les groupes fonctionnels A(B)ₙ et en ce qu'on continue à procéder de la sorte, jusqu'à ce qu'on ait atteint la fonctionnalité souhaitée ou jusqu'à ce qu'une fixation par addition d'autres molécules ne soit plus possible, pour des raisons stériques ou d'autres raisons.

2. Procédé selon la revendication 1, caractérisé en ce que B et B' représentent des groupes NCO.

3. Procédé selon la revendication 2, caractérisé en ce que les groupes NCO sont transformés, par blocage, en une forme dans laquelle ils ne peuvent plus réagir avec les groupes réactifs avec des groupes NCO.

4. Procédé selon la revendication 3, caractérisé en ce que le blocage est réalisé par la formation d'uretdione.

5. Procédé selon la revendication 3, caractérisé en ce que le blocage est réalisé par des oximes.

6. Procédé selon la revendication 1, caractérisé en ce que les groupes fonctionnels B et B' sont des groupes réactifs avec des groupes NCO.

7. Procédé selon la revendication 6, caractérisé en ce que les groupes fonctionnels B et B' sont des groupes amino.

8. Procédé selon la revendication 6, caractérisé en ce que les groupes fonctionnels B et B' sont des groupes hydroxyle.

9. Procédé selon la revendication 7, caractérisé en ce qu'on utilise comme noyau d'initiateur de l'ammoniac ou au moins une amine bifonctionnelle.

10. Procédé selon la revendication 8, caractérisé en ce qu'on utilise comme noyau d'initiateur un diol aliphatique, cycloaliphatique ou aromatique, un triol, un tétraol ou un alcool de sucre.

11. Procédé selon la revendication 1, caractérisé en ce que les groupes fonctionnels B sont des groupes fonctionnels d'hydrogène.

12. Procédé selon la revendication 11, caractérisé en ce que les groupes fonctionnels B sont des groupes amino.

13. Procédé selon la revendication 11, caractérisé en ce que les groupes fonctionnels B sont des groupes hydroxyle.

14. Procédé selon la revendication 13, caractérisé en ce que le blocage des groupes B est réalisé par cétalisation ou par acétalisation.
